# EUROPÄISCHE PATENTSCHRIFT

(11) **EP 3 887 089 B1**
(45) Veröffentlichungstag und Bekanntmachung des Hinweises auf die Patenterteilung: **06.05.2026**
(21) Anmeldenummer: 19850785.7
(22) Anmeldetag: 25.11.2019
(51) Int. Cl.: B23Q 1/00, B23Q 17/00, F15B 15/28

(54) **SPANNSYSTEM MIT EINER HUBÜBERWACHTEN SPANNVORRICHTUNG**
CLAMPING SYSTEM WITH A STROKE-MONITORED CLAMPING DEVICE
SYSTÈME DE SERRAGE AVEC UN DISPOSITIF DE SERRAGE À COURSE SURVEILLÉE

(30) Priorität: 26.11.2018 DE 102018009227
(43) Veröffentlichungstag der Anmeldung: 06.10.2021
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2019/000301
(87) Internationale Veröffentlichungsnummer: WO 2020/098854

(56) Entgegenhaltungen:
- EP-A1- 2 390 067
- EP-B1- 1 421 340
- CH-A5- 691 042
- DE-A1- 10 036 885
- DE-A1- 102012 001 271
- JP-A- 2010 076 061
- US-A- 5 803 229

## Beschreibung

Die Erfindung betrifft ein Spannsystem mit einer hubüberwachten Spannvorrichtung, bei der das Spannsystem eine Spannvorrichtung und einen Kombibolzen umfasst. Die Spannvorrichtung lagert im Gehäuse mindestens einen auf mindestens drei Spannelemente wirkenden Kolben und weist zudem eine Aufnahmeausnehmung zur temporären Aufnahme des Kombibolzens auf. Der Kombibolzen ist mithilfe der Spannelemente in der Aufnahmeausnehmung fixierbar angeordnet.

Um ein Werkstück beispielsweise auf einem Maschinentisch einer Bearbeitungsmaschine wiederholgenau und effizient aufspannen zu können, kann in der Regel mindestens ein Nullpunktspannsystem eingesetzt werden. Anstelle des Werkstücks können auch Schraubstöcke, Paletten oder vergleichbare Vorrichtungen über dieses System fixiert werden.

Aus einem Prospekt der Vischer & Bolli AG, Werkzeug- und Spanntechnik aus Dübendorf in der Schweiz ist ein mit "vb Dock Lock AirLine" bezeichnetes Spannsystem aus dem September 2018 bekannt, dessen Spannvorrichtung einen kompliziert geformten Ringkolben aufweist, der mit seiner konischen Innenwandung auf in einem Trägerring gelagerte Spannsegmente wirkt, die sich beim Spannvorgang an einem in eine Aufnahmebohrung einsteckbaren Kombibolzen spannend anlegen. Die Aufnahmebohrung ist bei ungenutztem Spannsystem mit einer Verschlusskappe verschlossen.

In der DE 10 2015 206 590 B3 werden ein Spannmodul und ein Spannsystem, insbesondere ein Nullpunktspannsystem, beschrieben, bei denen ein Spannbolzen in einer Aufnahmebohrung einspannbar ist. Im Spannmodul sind dazu drei radial verfahrbar um die Mittellinie des Spannsystems angeordnete Schlitten positioniert, die über plane Keilflächen den Spannbolzen quer verschiebbar lagern.

Aus der JP 2010 076061 A ist ein Werkzeugmaschinentisch mit Palettenwechselfunktion zur klemmbaren Aufnahme von Paletten bekannt. Der Maschinentisch verfügt über eine Vorrichtung, mit der der Klemmzustand der Palettenspannvorrichtung prüfbar ist. Dazu weist die Palette vier im Kreis angeordnete Spannvorrichtungen auf, deren Kolben auf eine schwenkbare Indexscheibe wirken. Die Indexscheibe hat vier radial angeordnete Nuten, in die kegelförmig ausgebildete Spitzen der Kolben - je nach Spannzustand der Vorrichtung - unterschiedlich tief hineinragen. Die gegen einen Anschlag federelastisch gehaltene Indexscheibe liegt pro Nut jeweils in einem Punktkontakt an der Mantelfläche der Kolbenkegelspitze an. Mit zunehmender Eindringtiefe verschwenken die Spannbolzen die Indexscheibe. Zum Prüfen des Schwenkwinkels weist die Indexscheibe an ihrem Umfang zwei Kerben auf, deren Positionen mit zwei Näherungssensoren abgetastet werden. Der Schwenkwinkel ist somit eine Funktion des Hubs der Kolben, von dem nur drei Winkelpositionen näherungsweise detektiert werden können.

Die DE 100 36 885 A1 offenbart eine Schnellspanneinheit, auf der der Oberbegriff des Patentanspruchs 1 basiert, um mittels eines Kolbens und verformbarer Klemmelemente einen Schnellspannzapfen zu sichern. Bei vollständig eingefahrenem Kolben betätigt der Boden des Gehäuses einen Schalter, der den Abschluss des Einspannvorgangs meldet. Weiterhin sind Druckluft- oder Luftströmungssensoren vorgesehen, die den Luftdruck oder den Luftdurchfluss im Spalt zwischen dem Boden und dem Kolben messen.

Nach der DE 10 2012 001 721 A1 soll für eine Lageüberwachung eines Aktuators ein außerhalb der Betriebsmedien angeordneter Wegsensor und eine Steuervorrichtung eingesetzt werden. Diese Steuervorrichtung hat eine Hochspannungsquelle zur Ansteuerung einer elektrorheologischen Zylinder-Kolben-Einheit.

Der vorliegenden Erfindung liegt die Problemstellung zugrunde, ein Spannsystem aus einer Spannvorrichtung und einem Kombibolzen zu entwickeln, dessen Baugruppen bei einem kleinen Bauraum eine hohe Verschleißfestigkeit, eine sehr gute Betriebssicherheit bei einfacher Adaptierbarkeit und eine große Einzugskraft gewährleisten. Zugleich soll der Spannvorgang des Kombibolzens überwacht werden.

Diese Problemstellung wird mit den Merkmalen des Patentanspruchs 1 gelöst. Dabei ist am Gehäuse ein adaptierbares Sensorengehäuse angeordnet, in dem ein absolutes Wegmesssystem untergebracht ist. Das Wegmesssystem umfasst einen im Sensorengehäuse ortsfest angeordneten Sensor-IC und eine mit dem Kolben mechanisch gekoppelte Magnetplatte.

Mit der Erfindung wird ein Spannsystem zur Verfügung gestellt, bei dem die in der Spannvorrichtung angeordneten Spannelemente am Kombibolzen mit ihren Spannflächen vollflächig zur Anlage kommen. Dadurch ergeben sich auch bei hohen Einzugskräften verhältnismäßig niedrige Flächenpressungen. Die großen Kontaktflächen garantieren eine hohe Formsteifigkeit des Gesamtsystems, womit die Spannvorrichtung über den Kombibolzen auch große Lastmomente problemlos abstützen kann.

Die Spannelemente, die Teile eines über Elastomerkörper zusammenmontierten Spannrings sind, bilden mit einem Ringkolben zusammen ein Keilgetriebe, bei dem der axiale Hub des Ringkolbens radiale, auf den Spannring wirkende Spannkräfte erzeugt. Über die Elastomerkörper des Spannrings sind die segmentartigen Spannelemente in Umfangsrichtung elastisch gekoppelt. Der Ringkolben wird im Ausführungsbeispiel mittels Federkraft in die Spannstellung der Spannvorrichtung bewegt und dort gehalten. Gegebenenfalls wird der Spannvorgang mithilfe von Druckluft unterstützt. Zum Entlasten des gespannten Spannrings und zum Zurückfahren des Ringkolbens - für die Freigabe des Kombibolzens - wird Druckluft eingesetzt. Zusätzlich wird der Innenraum der Spannvorrichtung unter Sperrluft gesetzt, um während der Werkstückbearbeitung ein Eindringen von Spänen, Kühl- oder Schmiermittel zu verhindern. Gegebenenfalls kann zum Bewegen des Ringkolbens auch ein Hydrauliköl benutzt werden.

Gemäß dem Ausführungsbeispiel ist an der Unterseite der Spannvorrichtung als separates Modul ein Sensorengehäuse angeordnet, das mindestens ein absolut arbeitendes Wegmesssystem enthält. Letzteres überwacht die Stellung bzw. die Hubposition des den Spannring zustellenden Kolbens. Das an der Unterseite der Spannvorrichtung adaptierbare Sensorengehäuse hat z.B. zwei aus seinem Gehäusedeckel herausragende Bolzen, die in Bohrungen der Spannvorrichtungsunterseite hineinragen, um dort in Führungsbohrungen geführt zu werden und zugleich an dem Kolben befestigt zu werden. Das Wegmesssystem umfasst neben dem oder den Sensoren auch eine Auswerteelektronik.

Mit der Auswerteelektronik werden mindestens drei Hubpositionen der Magnetplatte des Sensorsystems unterschieden. Die erste Position ist erreicht, wenn der Kolben aufgrund der Wirkung seiner Rückholfedern seine obere Position eingenommen hat. Die Magnetplatte befindet sich in der zweiten Position, wenn der Kolben gegen die Wirkung seiner Rückholfedern in seine andere Extremlage verfahren worden ist. Die dritte Hubposition beschreibt keine punktuelle Position, sondern einen bestimmten Hubbereich. In diesem Hubbereich befindet sich der Kolben, wenn er über die Spannelemente den Kombizapfen fest im Nullpunktspannsystem fixiert hat. Der Hubbereich ist erforderlich, um zum einen dem im Lauf der unzähligen Lastwechsel eintretenden Verschleiß an den Keilgetriebeflächen des Kolbens und der Spannelemente gerecht zu werden. Mit zunehmendem Verschleiß wird der Spannhub des Kolbens größer. Zum anderen werden mit der Spannvorrichtung viele verschiedene Kombibolzen gepaart. Entsprechend der Fertigungstoleranzenbreite der Kombibolzen tauchen diese für ein sichers Spannen mehr oder weniger tief in die Aufnahmeausnehmung ein, sodass sich theoretisch für jeden Kombibolzen ein eigener Spannhub ergibt. Ein von der Auswerteelektronik ermitteltes Anwachsen des Spannhubs kann auf einem gerätenahen Display oder dem Monitor der mit der Spannvorrichtung z.B. über einen IO-Link-Bus in Verbindung stehenden SPS als baldiges Verschleißindiz angezeigt werden.

Weitere Einzelheiten der Erfindung ergeben sich aus den Unteransprüchen und der nachfolgenden Beschreibung mindestens einer schematisch dargestellten Ausführungsform.
- Figur 1:: perspektivische Ansicht eines Spannsystems mit einer Spannvorrichung mit einer Kolbenpositionsabfrage;
- Figur 2:: Schnitt durch das drucklose geschlossene Spannsystem;
- Figur 3:: Schnitt durch das geschlossene Spannsystem mit druckbelastetem Ringkolbenboden;
- Figur 4:: wie Figur 3, jedoch mit ausgefahrenem Reinigungskolben;
- Figur 5:: Schnitt durch das Spannsystem mit druckbelasteter Ringkolbenfrontseite und mit teilweise eingetauchtem Kombibolzen;
- Figur 6:: wie Figur 5, jedoch mit vollständig eingetauchtem, aber unverriegeltem Kombibolzen;
- Figur 7:: wie Figur 6, jedoch mit mittels der Federspannkraft des Ringkolbens verriegeltem Kombibolzen;
- Figur 8:: Spannring von schräg oben;
- Figur 9:: Spannring von schräg unten;
- Figur 10:: Draufsicht auf den Spannring;
- Figur 11:: perspektivische Ansicht einer Verschlusskappe von schräg unten mit ausgefahrenem Reinigungskolben;
- Figur 12:: wie Figur 11, jedoch schräg von der Seite;
- Figur 13:: Schnitt durch das Sensorengehäuse in der Ebene, in der der Magnetplattenträger gelagert ist;
- Figur 14:: perspektivische Einsicht in das Sensorengehäuse;
- Figur 15:: perspektivische Ansicht der Spannvorrichtung von unten;
- Figur 16:: perspektivische Ansicht des Sensorengehäuses von oben.

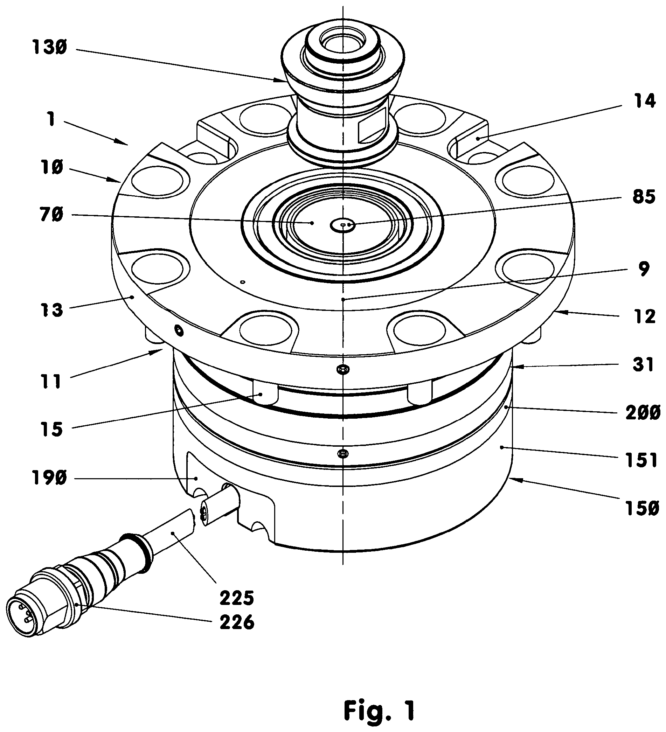

Die Figur 1 zeigt ein Spannsystem (1), das aus einer Spannvorrichtung (10) und einem Kombibolzen (130) besteht. Die Spannvorrichtung (10) ist zur Aufnahme eines Werkstücks beispielsweise in einem Maschinentisch integriert. An dem zu spannenden Werkstück ist in der Regel mindestens ein Kombibolzen (130) - über den das Werkstück am Maschinentisch adaptierbar ist - befestigt. Das Gehäuse (11) der Spannvorrichtung (10), an dessen Unterseite ein Sensorengehäuse (150) befestigt ist, beinhaltet eine Mechanik, die den Kombibolzen (130) wiederholgenau in der Spannvorrichtung (10) positioniert. Diese Mechanik umfasst ein Keilgetriebe (63, 111), dessen Antriebsteil ein Ringkolben (40) ist. Am Ringkolben (40) ist eine Maßverkörperung (223) befestigt, die der Ringkolben (40) zu dessen präziser Lagebestimmung im Sensorengehäuse (150) entlang eines Sensors (222) führt.

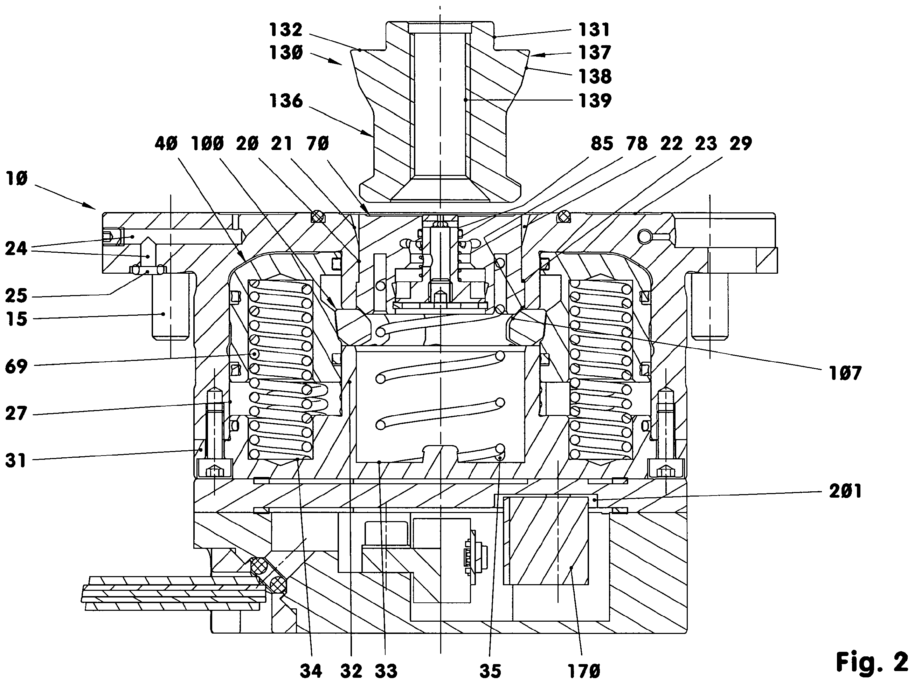

Das in Figur 2 dargestellte Gehäuse (11) besteht im Wesentlichen aus einem flanschartigen Gehäusegrundkörper (12) und einem in der Unterseite des Gehäusegrundkörpers (12) sitzenden Gehäusedeckel (31). Beide Teile sind z.B. aus dem rost-, säure- und hitzebeständigen Stahl X90CrMoV18 gefertigt.

Der einteilige, z.B. 44 mm hohe, Gehäusegrundkörper (12) setzt sich aus einer Flanschplatte (13) und einem daran angeformten Zylinder (27) zusammen. Die Flanschplatte (13) hat hier einen Durchmesser von 112 mm bei einer Wandstärke von 10 mm. Der Zylinder (27) hat einen Außendurchmesser von 86 mm bei einer maximalen Wandstärke von 6 mm. Die Flanschplatte (13) und der Zylinder (27) haben eine gemeinsame Mittellinie (9). Im Übergangsbereich zwischen dem Zylinder (27) und der Bodenseite der Flanschplatte (13) befindet sich zur Erhöhung der Formsteifigkeit des Gehäusegrundkörpers (12) eine, senkrecht zur Mittellinie (9) gemessen, z.B. 5,5 mm breite Fase (42), deren Kegelwinkel 120 Winkelgrade misst.

Die Flanschplatte (13) hat in ihrem äußeren Bereich, der über den Zylinder (27) übersteht, z.B. acht äquidistant auf dem Umfang verteilte Senkbohrungen zur Aufnahme von Befestigungsschrauben (15), über die die Spannvorrichtung (10) starr am Maschinentisch befestigt werden kann. Die Senkbohrungen sind mit Kunststoffkappen staubdicht verschlossen. Zwischen je zwei Senkbohrungen sind in der Flanschplatte (13) von außen her zwei z.B. 17 mm lange feinbearbeitete Positionierlanglöcher (14) eingearbeitet. Sie haben eine Tiefe von 5,8 mm. Das einzelne Positionierlangloch (14) dient dem Blockieren des Drehfreiheitsgrads um die Mittellinie (9) bei der Verwendung nur eines Kombibolzens (130).

Nach Figur 2 weist die Flanschplatte (13) auf der linken Seite ein Kanalsystem (24) auf, über das ggf. ein zwischen der Flanschplatte (13) und dem aufliegenden Werkstück vorhandener Staudruck zur Kontrolle einer korrekten Werkstückauflage über einen Auflagenkontrollanschluss (25) einem Messgerät zuführbar ist. Für diesen Fall hat die Flanschplatte (13) auf ihrer Oberseite eine Axialringsnut (29), die im Ausführungsbeispiel bei einem Innendurchmesser von z.B. 48 mm und einem Außendurchmesser von z.B. 74 mm eine Tiefe von z.B. 0,3 mm aufweist. Sofern das auf der Flanschplatte (13) aufliegenden Werkstück die Axialringnut (29) vollständig abdeckt, kann der in Letzterer anliegende Staudruck zur Kontrolle verwendet werden. Die Fläche der Axialringnut (29) beträgt mindestens 25 % der werkstücktragenden Oberseite der Flanschplatte (13).

Die Flanschplatte (13), auf deren Oberseite das jeweilige Werkstück aufliegt, hat im Zentrum eine zentrale Aufnahmeausnehmung (20), die von einem an der Flanschplatte (13) angeformten Stützrohr (16) ummantelt ist. Das nach innen ragende Stützrohr (16) hat bei einer Länge von 9,5 mm eine feinbearbeitete Stirnfläche. Die der Aufnahmeausnehmung (20) abgewandte Wandung des Stützrohrs (16) ist - zur Innenführung des Ringkolbens (40) - eine feinbearbeitete zylindrische Fläche.

Die Aufnahmeausnehmung (20) hat in ihrem oberen Bereich eine kegelstumpfmantelförmige Zentrierspannfläche (21), deren Kegelwinkel z.B. 30 Winkelgrade beträgt. Die Höhe der Zentrierspannfläche (21) misst z.B. 5,6 mm. Im unteren Bereich weist die Aufnahmeausnehmung (20) einen im Durchmesser um z.B. 1 mm aufgeweiteten Hintergriffsabsatz (23) auf.

Die feinbearbeitete außenliegende Innenwandung des Zylinders (27) hat im mittleren Bereich eine umlaufende Entlüftungsnut (28).

Der Gehäusedeckel (31) sitzt über die Innenwandung des Zylinders (27) zentriert und abgedichtet im Gehäusegrundkörper (12). Er weist im Zentrum ein in den Gehäusegrundkörper (12) hineinragendes Anschlagrohr (32) auf, das eine sacklochartige Verschlusskappenausnehmung (33) umgibt. Letztere hat bei einem Durchmesser von 28 mm eine Tiefe von 19,3 mm. Die Mittellinien des Anschlagrohrs (32) und der Verschlusskappenausnehmung (33) liegen auf der Mittellinie (9). Das Anschlagrohr (32) weist zumindest eine feinbearbeitete Stirnfläche auf.

Die Außenwandung des Anschlagrohres (32) hat - ebenfalls zur Innenführung des Ringkolbens (40) - eine feinbearbeitete zylindrische Außenwandung, deren Höhe 11,5 mm misst. Die an das Anschlagrohr (32) anschließende Deckelwandung hat eine Wandstärke von z.B. 10,5 mm. In diesem Bereich verfügt der Gehäusedeckel (31) über zwölf auf einem Kreis um die Mittellinie (9) angeordnete Sacklochbohrungen (34) zur Lagerung und Führung von Schraubendruckfedern (69). Die Sacklochbohrungen (34) haben bei einer Tiefe von 7,3 mm einen Durchmesser von 10,6 mm.

Bei montierter Spannvorrichtung (10) beträgt der Abstand zwischen den Stirnflächen des Stützrohrs (16) und des Anschlagrohrs (32) z.B. 6 mm. Zwischen diesen Stirnflächen ist ein Spannring (100) angeordnet.

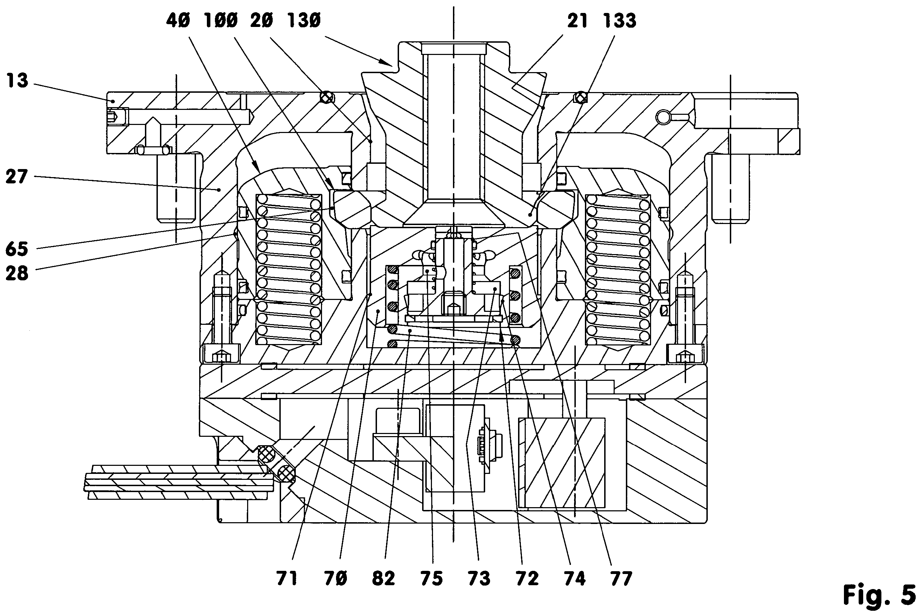

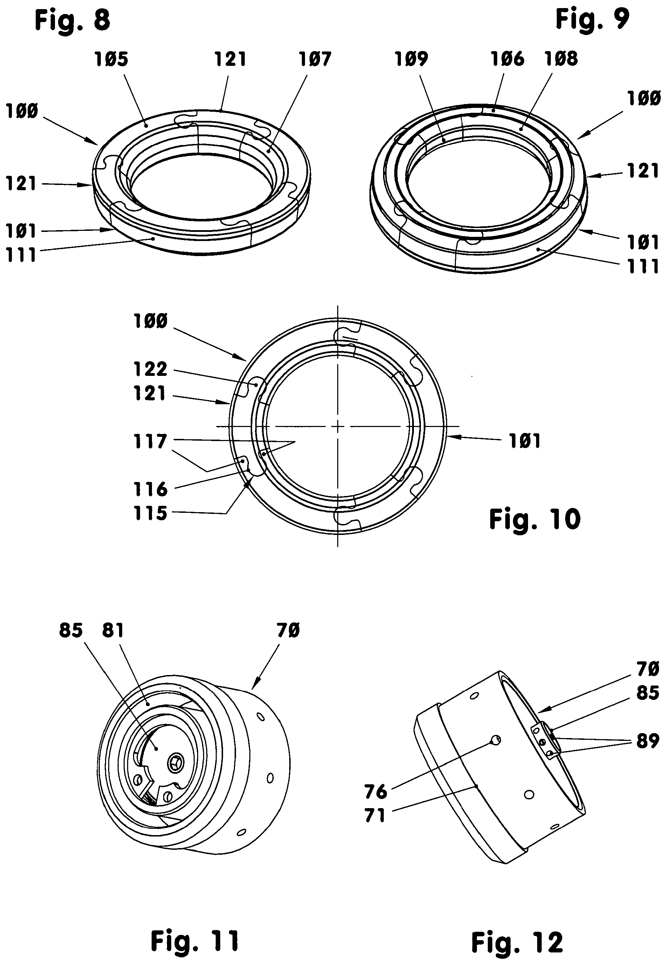

Der Spannring (100), vgl. Figuren 8 und 9, ist ein z.B. aus drei Spannelementen (101) und drei Federelementen (121) montierter Ring, dessen Querschnitt über den gesamten Spannring (100) konstant ist. Die segmentartigen Spannelemente (101) sind aus dem Stahl X90CrMoV18 gefertigt. Die Federelemente sind hier Elastomerkörper (121), die aus einem Gummi- oder einem Gummiersatzwerkstoff hergestellt sind. Die Spannelemente (101) überdecken im Spannring (100) einzeln jeweils 85 Winkelgrade, während die Elastomerkörper (121) 35 Winkelgrade überdecken. Im unverformten Zustand hat der Spannring (100) einen Innendurchmesser von 23 mm und einen Außendurchmesser von 35 mm. Seine in Axialrichtung messbare Breite ist 0,015 mm kleiner als der zwischen den Stirnflächen des Stützrohrs (16) und des Anschlagrohrs (32) gemessene Abstand. Der Innendurchmesser des Spannrings (100) kann im Bedarfsfall auf z.B. 27 mm elastisch ausgedehnt werden, vgl. Figur 5.

Gemäß Figur 5 hat der Spannring (100) einen siebeneckigen Einzelquerschnitt (102). Seine Breite und seine Höhe sind dabei zumindest nahezu identisch. Der Einzelquerschnitt (102) wird oben durch eine plane Spannfläche (105), unten durch eine plane Aufliegefläche (106), innen durch eine zylindrische Innenfläche (109) und außen durch eine kegelstumpfmantelförmige Spannringkeilfläche (111) begrenzt, vgl. auch Figuren 8 und 9. Die Spannringkeilfläche (111) hat einen Kegelwinkel von 12 Winkelgraden.

Zwischen der Innenfläche (109) und der Aufliegefläche (106) befindet sich als Fase eine kegelstumpfmantelförmige Hüllspannfläche (108), deren Kegelwinkel 120 Winkelgrade beträgt. Zwischen der obenliegenden Spannfläche (105) und der Innenfläche (109) ist eine Aufschiebekeilfläche (107) als Fase angeordnet. Ihr Kegelwinkel beträgt 90 Winkelgrade. Im äußeren Bereich geht die Aufliegefläche (106) in die Spannringkeilfläche (111) mittels der Spannringrückhubfläche (112) über. Letztere hat einen Keilwinkel von 105 Winkelgraden.

Unter Vernachlässigung der Kantenabrundungen hat die Hüllspannfläche (108) eine Fasenlänge von z.B. 2,2 mm, die Aufschiebekeilfläche (107) von z.B. 2,8 mm und die Spannringrückhubfläche (112) von z.B. 2,5 mm. Die wirksame Breite der Spannringkeilfläche (111) hat unter Berücksichtigung der Kantenabrundungen und Fasen eine wirksame Breite von 2,9 mm.

Wie die Figuren 8 und 9 zeigen, sitzt jeweils zwischen zwei Spannelementen (101) formschlüssig ein Elastomerkörper (121). Dazu hat das einzelne Spannelement (101) im Bereich seiner planen Stirnseite, vgl. Figur 10, eine Hintergriffsausnehmung (115), in die ein stirnseitiger Klemmzapfen (122) des benachbarten Elastomerkörpers (121) eingreift.

Die Hintergriffsausnehmung (115) ist teilweise eine Bohrung (116). Sie hat einen Durchmesser von 3 mm und ist von der nächstgelegenen Stirnseite des Spannelements (101) z.B. 2,3 mm entfernt. Ihre Mittellinie ist parallel zur Mittellinie (9). Die Mittellinien der Bohrungen (116) liegen 3 mm entfernt von der Innenfläche (109). Zwischen der Bohrung (116) und der Stirnseite ist zur Ausbildung von zwei Hintergriffen (117) eine z.B. 2 mm breite Öffnung vorgesehen. Der jeweilige Klemmzapfen (122) des Elastomerkörpers (121) hat eine zur Hintergriffsausnehmung (115) komplementäre Geometrieform. Der Durchmesser des einzelnen Klemmzapfens (122) ist geringfügig größer als der der Bohrung (116), um nach der Montage die sechs Teile des Spannrings (100) sicher zusammenzuhalten.

Im Innenraum der Spannvorrichtung (10) sitzt der um z.B. 5,5 mm verschiebbare Ringkolben (40). Letzterer hat einen Außendurchmesser von 70 mm und eine Kolbenbreite von 21,5 mm. Der Ringkolben (40) hat eine zentrale Kolbenbohrung (51) mit einem minimalen Innendurchmesser von 33 mm. Die Ringkolbenfrontseite (41) ist passend zum Boden der Flanschplatte (13) im äußeren Bereich angefasst. Im planen Ringkolbenboden (45) befinden sich zwölf Federführungsbohrungen (46), die gegenüber den Sacklochbohrungen (34) des Gehäusedeckels (31) angeordnet sind. In der Außenwandung (47) des Ringkolbens (40) befinden sich zwei Dichtringnuten zur Aufnahme von Dichtringen.

Die Kolbenbohrung (51) ist in drei Bereiche aufgeteilt. Der vordere obere Bereich ist die obere Dichtzone (52), in der in einer Dichtringnut (53) ein Dichtring (54) angeordnet ist. Der Dichtring (54) liegt an der Außenwandung des Stützrohrs (16) an. Der hintere untere Bereich ist die untere Dichtzone (55), in der sich ebenfalls in einer Dichtringnut (56) ein Dichtring (57) befindet. Der untere Dichtring (57) kontaktiert die Außenwandung des Anschlagrohrs (32) des Gehäusedeckels (31). Alle Dichtringe sind beispielsweise Quadringe.

Im mittleren, zwischen den beiden Dichtzonen (52, 55) gelegenen Bereich der Kolbenbohrung (51) befindet sich eine Ringnut (61), die aus einem Arbeitsabschnitt (62) und einem Eintauchabschnitt (65) besteht. Der Arbeitsabschnitt (62) weist eine kegelstumpfmantelförmige Ringnutkeilfläche (63) auf, an der sich beim Spannen des Kombibolzens (130) der Spannring (100) in Radialrichtung abstützt. Die Ringnutkeilfläche (63) hat einen Kegelwinkel von 12 Winkelgraden. Sie erstreckt sich in der Ringnut (61) auf einer Länge von z.B. 4 mm.

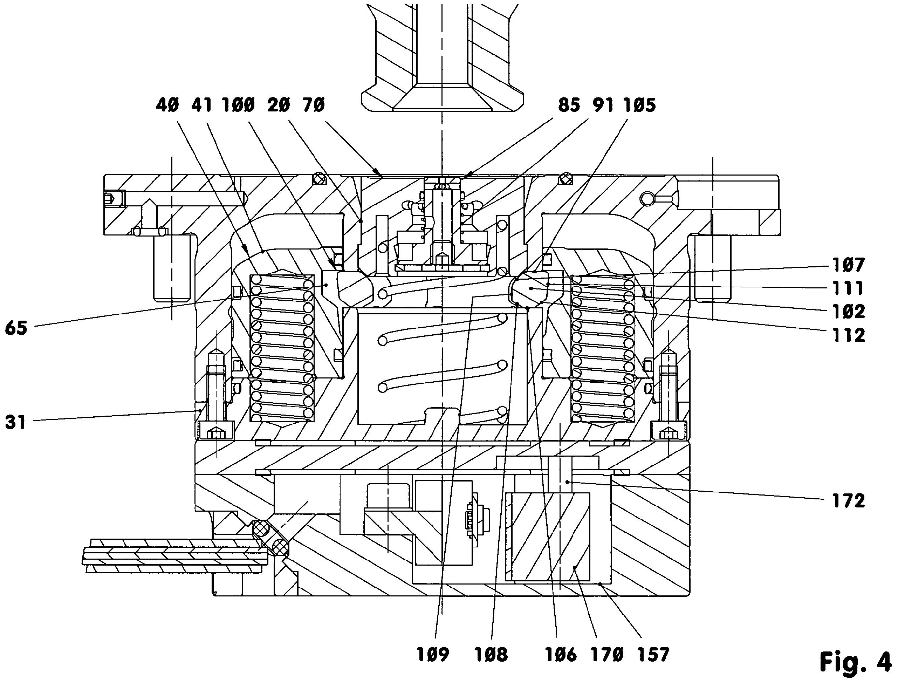

Nach Figur 4 schließt sich an ihrem oberen Ende der Eintauchabschnitt (65) an. Letzterer hat einen zylindrischen Nutgrund, dessen Nuttiefe z.B. 3,5 mm beträgt. Die untere kegelstumpfmantelförmige Flanke des Eintauchabschnitts bildet eine Rückhubfläche (66), deren Kegelwinkel 105 Winkelgrade misst. Der Eintauchabschnitt (65) nimmt den Spannring (100) komplett auf, wenn die Verschlusskappe (70) auf der Fahrt in die Verschlusskappenausnehmung (33) des Gehäusedeckels (31) den Spannring (100) - unter dessen Aufweitung - passiert. Der Übergang zwischen der Ringnutkeilfläche (63) und der Rückhubfläche (66) ist abgerundet.

Selbstverständlich kann die Außenwandung (47) des Ringkolbens (40) eine ovale, eine elliptische, eine polygonale oder eine vieleckige Kontur haben. Das gleiche gilt für die Kontur der Innenwandung (48).

Die Verschlusskappe (70) ist ein im Wesentlichen rotationssymmetrisches, kolbenartiges Bauteil, das bei nicht genutzter Spannvorrichtung (10) die Aufnahmeausnehmung (20) verschließt, vgl. Figuren 1 bis 4. Sie ist ebenfalls aus dem rostfreien Stahl X90CrMoV18 hergestellt. Ihre Stirnseite ist bis auf einen 0,9 mm breiten Rand um 0,3 mm eingezogen. Die Verschlusskappe (70) hat eine zylindrische Außenwandung, die im unteren Bereich einen Wellenbund (71) aufweist, mit dem sie in der Geschlossenstellung am Hintergriffsabsatz (23) der Aufnahmeausnehmung (20) anliegt. Zentral wird sie von einer Stufenbohrung (72) durchdrungen, die sich in mehreren Stufen zur vorderen Stirnseite hin verjüngt.

Nach Figur 4 ist der untere Bereich der Stufenbohrung (72) ein Zylinderbereich (73), der einen Durchmesser von 15 mm hat. In der Wandung des Zylinderbereichs (73) befinden sich eine Ringnut für einen Sicherungsring und mindestens zwei Überströmkerben (74). An den Zylinderbereich (73) schließt sich ein Luftverteilbereich (75) an, von dem aus sich z.B. acht Freiblasbohrungen (76) zur radialen Außenwandung der Verschlusskappe (70) erstrecken. Die Freiblasbohrungen (76) liegen alle in einer Ebene. Sie enden tangential im Luftverteilbereich (75), wobei ihre Mittellinien einen zur Mittellinie (9) zentrischen Kreis mit z.B. 10,4 mm Durchmesser tangieren. Durch diese Anordnung der Freiblasbohrungen (76) entsteht beim Freiblasen in dem sich nach oben aufweitenden Zentrierspalt (22) eine sich schraubenförmig windende Freiblasströmung. Auf den Luftverteilbereich (75) folgt eine Führungsbohrung (77), deren Durchmesser 6 mm misst.

Zwischen der Außenwandung der Verschlusskappe (70) und der Stufenbohrung (72) ist in der unteren Hälfte der Verschlusskappe (70) eine Federführungsringnut (81) eingearbeitet. In Letzterer sitzt eine z.B. fünf Windungen aufweisende Schließfeder (82) in Form einer Schraubendruckfeder, die sich am Boden der Verschlusskappenausnehmung (33) des Gehäusedeckels (31) abstützt.

Die untere Stirnfläche der Verschlusskappe (70) weist als Spreizfase (78) eine 1,4 x 45°-Fase nach DIN 406-11 auf. Das Führungsspiel der Verschlusskappe (70) in der Aufnahmeausnehmung (20) ist kleiner als 0,1 mm.

In der Stufenbohrung (72) sitzt, durch einen Sicherungsring axial gesichert, vgl. Figur 11, ein Reinigungskolben (85). Sein im Zylinderbereich (73) gelagerter Kolben ist mit seiner Kolbenstange (86) abgedichtet in der Führungsbohrung (77) geführt. Die Kolbenstange (86) hat eine Durchgangsbohrung (87), die im Kolbenbereich z.B. mittels eines Gewindestifts verschlossen ist. In der freien Stirnfläche der Kolbenstange (86) befindet sich eine axial ausblasende Düsenbohrung (89). Beispielsweise 1 mm unterhalb der freien Stirnfläche befinden sich z.B. acht weitere, jedoch radial ausblasende Düsenbohrungen (89), vgl. auch Figur 12. Im Luftverteilbereich (75) hat die Kolbenstange (86) mindestens eine Radialbohrung (88), über die die Durchgangsbohrungen (87) mit Druckluft versorgt werden.

In den Figuren 1 bis 4 ist jeweils oberhalb der Spannvorrichtung (10) der noch nicht in die Aufnahmeausnehmung (20) versenkte Kombibolzen (130) dargestellt. Er ist ebenfalls aus dem rostbeständigen Stahl X90CrMoV18 hergestellt und wie die Spannelemente (101) auf 56 + 3 HRC gehärtet. Der Kombibolzen (130) hat die Aufgabe, das Werkstück an der Spannvorrichtung (10) zu spannen und zugleich in dieser präzise zu zentrieren. Er ist ein z.B. 30 mm langes Drehteil, das eine zentrale Durchgangsbohrung (139) mit einem M10-Gewinde aufweist. Die Durchgangsbohrung (139) hat werkstückseitig eine 3 mm tiefe Passsenkung mit einem Durchmesser von z.B. 10,5 mm. An ihrem gegenüberliegenden Ende weist sie eine 90°-Senkung auf.

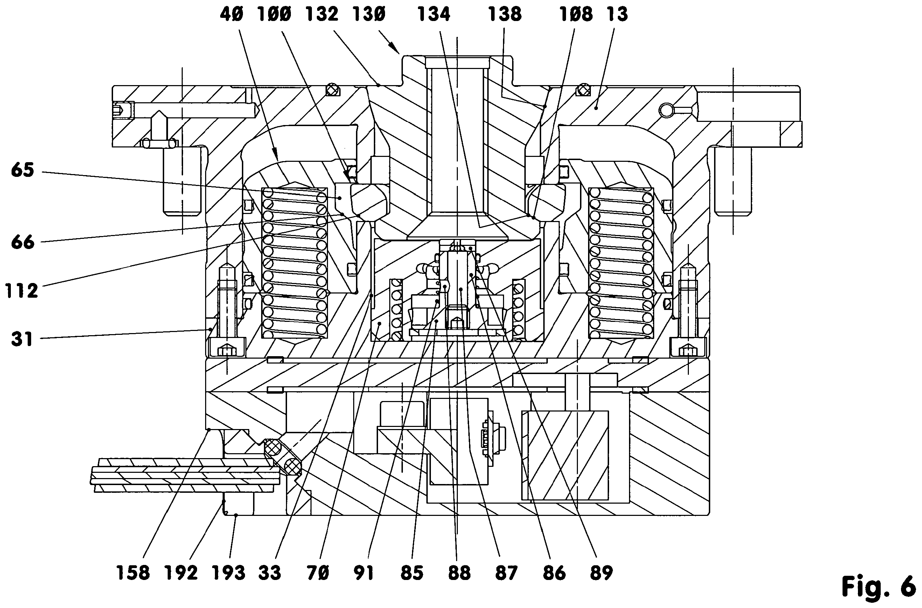

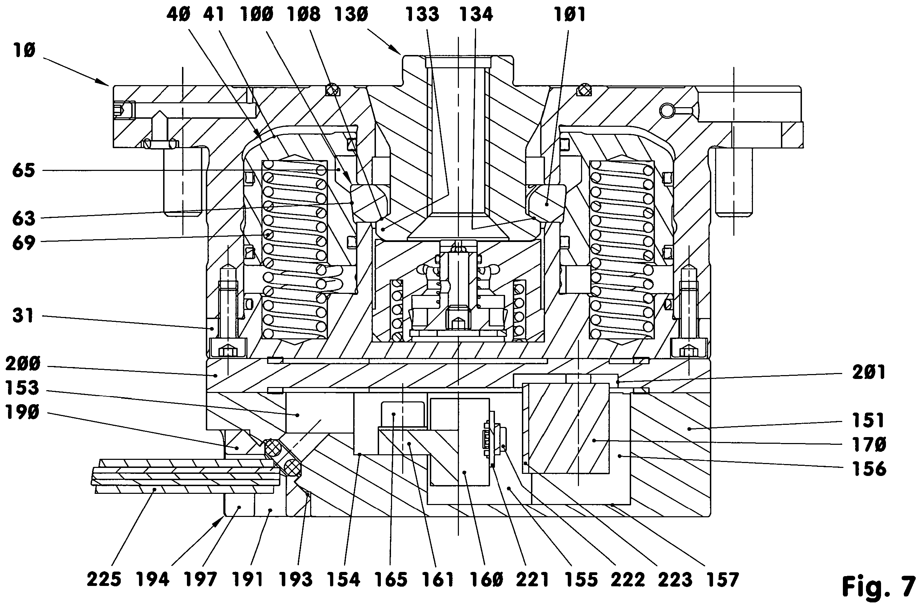

Am werkstückseitigen Ende ist der Kombibolzen (130) mit einem Passzylinderabschnitt (131) ausgestattet, dessen Durchmesser z.B. 18 mm und dessen Höhe z.B. 5 mm misst. Er endet in einer planen Axialanlagefläche (132). Der Teil des Kombibolzens (130), der nach den Figuren 6 und 7 vollständig in die Aufnahmeausnehmung (20) eintaucht, besteht im Wesentlichen aus drei Bereichen. Der vordere Bereich ist der Spannbereich (133) und der hintere Bereich ist der Zentrierbereich (137). Zwischen diesen beiden Bereichen liegt der Taillenbereich (136). Der Spannbereich (133), der in einem z.B. 1,5 mm breiten zylindrischen Abschnitt einen Durchmesser von z.B. 26,8 mm hat, dient beim Spannen des Werkstücks u.a. als Hintergriff, der am Spannring (100) zur Anlage kommt. Er hat dazu eine kegelstumpfmantelförmige Innenspannfläche (134), mit der er im gespannten Zustand großflächig an der Hüllspannfläche (108) des Spannrings (100) anliegt. Die wirksame Flankenlänge der Innenspannfläche (134) beträgt unter Berücksichtigung der Ab- und Ausrundungen mindestens 2,4 mm.

Zwischen dem zylindrischen Abschnitt und der vorderen Stirnseite des Spannbereichs (133) befindet sich eine Spannringrückhubfase (135), deren Kegelwinkel 90 Winkelgrade beträgt. Sie erleichtert beim Einfahren des Kombibolzens (130) in die Aufnahmeausnehmung (20) das Passieren des aufgedehnten Spannrings (100).

Der Zentrierbereich (137) des Kombibolzens (130) hat eine der Innenspannfläche (134) zugewandte feinbearbeitete Außenspannfläche (138), die zur Zentrierung an der Zentrierspannfläche (21) der Aufnahmeausnehmung (20) - nach den Figuren 6 und 7 - großflächig anliegt. Die wirksame Flankenlänge beträgt unter Berücksichtigung der Ab- und Ausrundungen mindestens 5,4 mm. Der maximale Durchmesser der Außenspannfläche (138) misst z.B. 29,8 mm.

Der Taillenbereich (136) hat einen Durchmesser von z.B. 22 mm. In diesem Bereich befinden sich zwei gegenüberliegende Abflachungen, vgl. Figur 1, um zwei Angriffsflächen für einen Maulschlüssel mit der Schlüsselweite 20 zu haben.

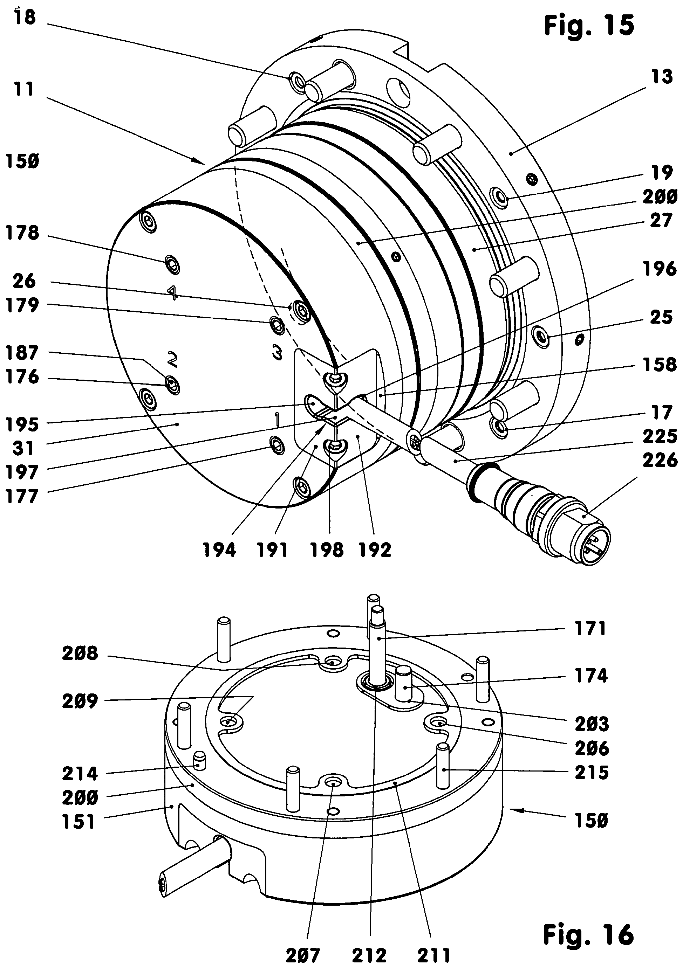

An der Unterseite des Gehäuses (11) ist ein Sensorengehäuse (150) befestigt, vgl. Figur 16. Das Sensorengehäuse (150), dessen Mittellinie deckungsgleich zur Mittellinie (9) ist, besteht aus einem Gehäuseunterteil (151) und einem Sensorengehäusedeckel (200). Beide Teile sind z.B. aus der Aluminiumlegierung AlSiMgMn gefertigt. Die Außendurchmesser ihrer zylindrischen Wandungen entsprechen dem Außendurchmesser des Zylinders (27). Das Gehäuseunterteil (151) hat eine Höhe von z.B. 20 mm, während die Höhe des Sensorengehäusedeckels (200) z.B. 5,5 mm beträgt.

Das Anschlussbild der pneumatischen Anschlüsse für den Spanndruck, den Entriegelungsdruck, den Ausblasdruck und die Sperrluft ist identisch bzw. deckungsgleich mit dem Anschlussbild der Unterseite des Gehäusedeckels (31).

An der Unterseite des Gehäusedeckels (31) ist der Deckel (200) des Sensorengehäuses (150), vgl. Figur 16, mit z.B. sechs Deckelschrauben (215) montierbar. Der Sensorengehäusedeckel (200) wird vor dem Gehäuseunterteil am Gehäusedeckel (31) befestigt. Die Schraubenköpfe der sechs Deckelschrauben (215) sind in den Zylindersenkungen der Bohrungen versenkt. Die Deckelschrauben (215) sind äquidistant verteilt auf einem Kreis mit dem Durchmesser von z.B. 75 mm. Im Bereich der Kabelanbindung sitzt in der Oberseite des Sensorengehäusedeckels (200) ein Deckelindexstift (214) als Montagehilfe zur Befestigung des Sensorengehäusedeckels (200) am Gehäusedeckel (31).

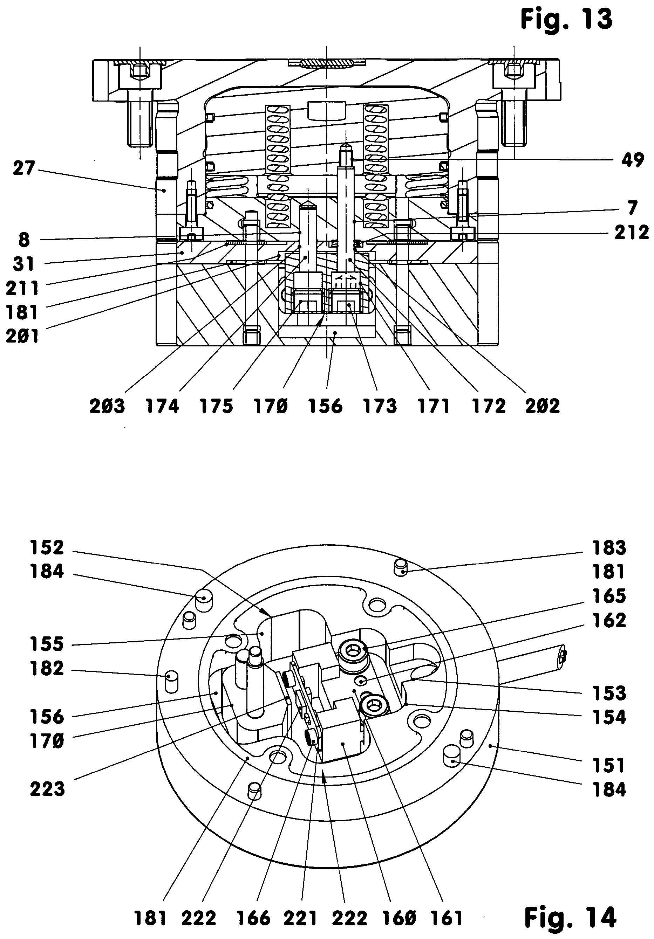

Der Sensorengehäusedeckel (200) weist zwei bohrungsartige Deckeldruchbrüche (202, 203) auf, vgl. auch Figur 13, die parallel zur Mittellinie (9) orientiert sind und die auf einem um die Mittellinie (9) angeordneten Kreis liegen, dessen Durchmesser 40 mm beträgt. Die Mittellinien beider Deckeldruchbrüche (202, 203) haben einen Abstand von 9 mm. Um den Deckeldruchbruch (202) herum befindet sich eine Zylindersenkung, in der ein Dichtring (212) angeordnet ist. Die beiden Deckeldurchbrüche (202, 203) dienen dem Durchstecken eines Haltebolzens (172) und eines Führungsbolzens (174) zum Tragen bzw. Führen eines Magnetplattenträgers (170). Die Durchmesser der Deckeldurchbrüche (202, 203) sind um 0,1 mm größer als die Führungsdurchmesser des Halte- (172) und des Führungsbolzens (174).

Im Bereich der Deckeldurchbrüche (202, 203) befindet sich auf der dem Gehäuseunterteil (151) zugewandten Deckelseite eine z.B. 3 mm tiefe rechteckige Hubausnehmung (201).

Auf einem Durchmesser von z.B. 75 mm befinden sich im Sensorengehäusedeckel (200) vier diesen durchdringende Zylinderbohrungen, vgl. Figur 16, eine Spanndruckdeckelbohrung (206), eine Entriegelungsdruckdeckelbohrung (207), eine Ausblasdeckelbohrung (208) und eine Sperrluftdeckelbohrung (209). Sie liegen deckungsgleich vor den Anschlüssen (36, 37, 38, 39) des Gehäusedeckels (31).

Zwischen dem Sensorengehäusedeckel (200) und dem Gehäusedeckel (31) ist eine ringförmige Foliendichtung (211) eingelegt, die alle Bohrungen (206-209) gasdicht umschließt.

Das Gehäuseunterteil (151), vgl. Figur 14, das von unten gegen den Sensorengehäusedeckel (200) montiert wird, hat einen z.B. kreuzförmigen Gehäuseinnenraum (152). Er ist in vier Bereiche unterteilt. Der erste Bereich ist ein Kabelschacht (153), dessen Tiefe 6,5 mm beträgt. Der zweite, an den ersten Bereich anschließende und z.B. 10 mm tiefe Bereich ist der Fixierbereich (154), in dem die Elektronik (221) bzw. die Hardware des Sensorsystems (220) präzise positioniert befestigt ist. Der dritte und größte Bereich ist der Hardwarebereich (155). An ihn schließt sich als vierter Bereich der Maßverkörperungshubbereich (156) an. Die beiden letztgenannten Bereiche haben einen durchgehenden Innenraumboden (157), vgl. Figur 7. Dort ist der Gehäuseinnenraum (152) z.B. 18 mm tief. Die Außenabmessungen des Gehäuseinnenraums (152) liegen innerhalb eines Kreises mit dem Durchmesser von z.B. 57 mm. In den Vollmaterialbereichen, die beim Herausfräsen der kreuzförmigen Form des Gehäuseinnenraums (152) erhalten geblieben sind, befinden sich auf einem Durchmesser von z.B. 51 mm vier Durchgangsbohrungen in einer 90-Winkelgradteilung. Die einzelnen Durchgangsbohrungen enden an der Unterseite des Gehäuseunterteils (151) in einem Spanndruckgehäuseanschluss (176), einem Entriegelungsdruckgehäuseanschluss (177), einem Ausblasgehäuseanschluss (178) und einem Sperrluftgehäuseanschluss (179). Jeder Anschluss hat ein kurzes M4-Gewinde, das jeweils durch einen Dichtgewindestift (187) gasdicht verschlossen werden kann.

Zur Befestigung eines mit der Hardware des Sensorsystems (220) verbundenen Kabels (225) ist für einen Kabeldurchführblock (190) eine Kabelklemmausnehmung (158) in das Gehäuseunterteil (151) eingearbeitet, vgl. Figuren 7 und 15.

Der Kabeldurchführblock (190) ist ein Kunststoffblock mit einem fünfeckigen, prismatischen Querschnitt. Er hat zwei im Wesentlichen rechteckige, gleichgroße Seitenflächen (191, 192), vgl. Figur 14, die rechtwinklig aneinander stoßen, und eine großflächige Rückseite (193), die gegenüber jeder Seitenfläche (191, 192) um 45 Winkelgrade geneigt ist. Die Seitenfläche (191) liegt in der Ebene der Unterseite des Gehäuseunterteils (151), vgl. Figur 15. Im mittleren Bereich einer jeden Seitenfläche (191, 192) befindet sich je ein Langloch (195, 196) zur Durchführung des Kabels (225). Zwischen beiden Langlöchern (195, 196) befindet sich eine Umklemmnut (197), deren Nutbreite z.B. 20-30 % kleiner ist als die Schmalbreite der beiden Langlöcher (195, 196). Die beiden Langlöcher (195, 196) durchdringen sich im Bereich der Rückseite (193), vgl. Figur 7, sodass dort eine Öffnung zur Durchführung des Kabels (225) vorhanden ist. Die Langlöcher (195, 196) und die Umklemmnut (197) bilden die Kabeldurchführausnehmung (194). Letztere mündet, z.B. nach Figur 7, mittels einer 45-Winkelgradbohrung in den Kabelschacht (153).

Entlang der Kante, in der die Seitenflächen (191, 192) zusammenstoßen, befinden sich zwei Senkbohrungen (171) zur Aufnahme der Schrauben (198), deren Mittellinien mit jeder Seitenfläche (191, 192) einen 45-Winkelgradwinkel einschließen.

Die Kabelklemmausnehmung (158) des Gehäuseunterteils (151) hat eine geometrische Form, die zur Aufnahme des Kabeldurchführblocks (190) geeignet ist. Durch die Form der Kabeldurchführausnehmung (194) ist es nach der Montage des Kabels (225) noch möglich, das Kabel (225) entweder senkrecht aus der Unterseite des Gehäuseunterteils (151) oder - wie in den Figuren 1, 15 und 16 - senkrecht aus der zylindrische Außenwandung des Sensorengehäuses (150) herausragen zu lassen.

Auf einem Durchmesser von z.B. 75 mm befinden sich im Gehäuseunterteil (151) vier das Gehäuseunterteil (151) durchdringende Senkbohrungen zur Aufnahme der Gehäuseschrauben (183). Über Letztere wird das Gehäuseunterteil (151) am Sensorengehäusedeckel (200) befestigt. Zwei weitere Sacklochbohrungen dienen der Aufnahme von zwei Passstiften (184). In einer dritten Sacklochbohrung sitzt ein Gehäuseindexstift (182), vgl. Figur 14.

Zwischen dem Gehäuseunterteil (151) und dem Sensorengehäusedeckel (200) ist ebenfalls eine ringförmige Foliendichtung (181) eingelegt, die alle hinter den Anschlüssen (36-39) gelegenen Bohrungen gasdicht umschließt.

Im Gehäuseinnenraum (152) ist im Hardwarebereich (155), vgl. Figur 14, ein in der Draufsicht im Wesentlichen u-förmiger Platinenträger (160) angeordnet. An den freien stirnseitigen Enden der Schenkel des Platinenträgers (160) ist die Platine (221) mit je zwei Schrauben (166) fixiert, vgl. Figur 7. Der Platinenträger (160) hat einen Trägerflansch (161), der am Boden des Fixierbereichs (154) mit zwei Passstiften (162) positioniert und mit zwei Schrauben (165) befestigt ist. Die Kombination aus den beiden Passstiften (162) und den beiden Schrauben (165) kann durch zwei Passschrauben ersetzt werden.

Nach Figur 14 ragt der Magnetplattenträger (170) in den Maßverkörperungshubbereich (156) hinein. Der Magnetplattenträger (170) ist im Wesentlichen ein quaderförmiger Körper, an dessen der Platine (221) zugewandten Flanke die Magnetplatte (223) angeordnet ist. Er weist gemäß Figur 13 zwei nebeneinanderliegende, gleichförmige Bohrungen (171) mit je einer Zylindersenkung auf. In die Bohrung (171) ist der Haltebolzen (172), der den Durchbruch (203) und die Führungsdurchgangsbohrung (7) durchdringt, eingesteckt. Letzterer hat einen Kopf mit Innensechskant. Über den Innensechskant wird das freie Ende des Haltebolzens (172) in einer gestuften Gewindebohrung (49) des Ringkolbens (40) eingedreht. Die Zylindersenkung der Bohrung (171) hat in ihrem vorderen Bereich ein Innengewinde, in das ein Gewindestift (173) eingeschraubt ist, um den Haltebolzen (172) im Magnetplattenträger zu fixieren. Somit ist der Magnetplattenträger (170) starr mit dem Ringkolben (40) verbunden. Der Führungsbolzen (174), der durch den Durchbruch (203) in das Führungssackloch (8) eingreift, ist auf die gleiche Weise im Magnetplattenträger (170) befestigt wie der Haltebolzen (172). Der Führungsbolzen (174) verhindert ein Schwenken des Magnetplattenträgers (170) um die Mittellinie des Haltebolzens (172).

Das den Hub des Ringkolbens (40) überwachende Sensorsystem (220) besteht aus einem Sensor-IC (222) und einer magnetischen Maßverkörperung. Der Sensor-IC (222) ist auf der Platine (221) aufgelötet. Das Bauteil hat z.B. die Abmessungen 5 mm x 5 mm x 1 mm. Im Sensor-IC (222) sind versetzt zueinander zwei Hallsensoren angeordnet. Dem Sensor-IC (222) gegenüber ist in einem Abstand von 0,2 bis 1 mm als Maßverkörperung eine auf dem Magnetplattenträger (170) aufgeklebte Magnetplatte (223) der Abmessungen 10 mm x 10 mm x 1 mm positioniert. Die Magnetplatte (223) weist nebeneinanderliegend eine Masterspur und eine Noniusspur auf. Beide Spuren bestehen aus hintereinander aufgereihten aus Nord- und Südpolen bestehenden Polpaaren. Die Abmessung der Polpaare der Noniusspur sind, in Richtung der Relativbewegung zwischen Sensor-IC (222) und Magnetplatte (223) gesehen, um z.B. 1,5 bis 6,3% größer als die Abmessung der Polpaare der Masterspur. Das Messsystem ist ein Absolutmesswertgeber, dessen interpolierende Auswertung - ohne Referenzfahrt - eine Lageinformation mit einer Messwertauflösung von 3 µm ermöglicht.

Nach Figur 2 befindet sich die Spannvorrichtung (10) drucklos in ihrem unbetätigten Ausgangszustand. Die Verschlusskappe (70) sitzt in ihrer Schließposition. Zugleich liegt der Ringkolben (40) aufgrund der Wirkung der Schraubendruckfedern (69) am Boden des Zylinders (27) bzw. an der Flanschplatte (13) an. Dabei kontaktiert der Spannring (100) die Ringnutkeilfläche (63) des Ringkolbens (40). Der Spannring (100) ragt ca. zur Hälfte in die Aufnahmeausnehmung (20) hinein. Vor der Aufschiebekeilfläche (107) liegt die Verschlusskappe (70) mit ihrer Spreizfase (78) in einem Abstand von ca. 0,1 mm, womit ein Öffnen der Verschlusskappe (70) formschlüssig verhindert wird. Der Reinigungskolben (85) befindet sich in der Verschlusskappe (70) in seiner eingefahrenen Position. Der Magnetplattenträger (170) steht in seiner oberen Position, teilweise eingetaucht in der Hubausnehmung (201) des Sensorengehäusedeckels (200).

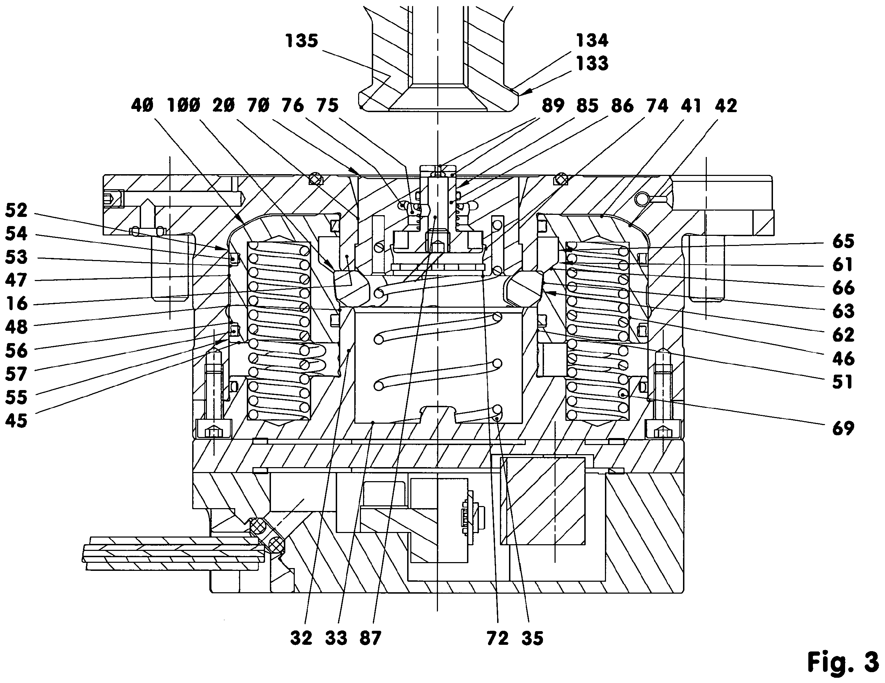

Gemäß Figur 3 steht an dem rückwärtigen Kolbenboden (45) des Ringkolbens (40) der pneumatische Solldruck an. Zugleich gelangt Druckluft über die Querbohrung (35) in die Aufnahmeausnehmung (20). Dort wirkt sie in der Verschlusskappe (70) auf den Reinigungskolben (85), wodurch dieser in der Stufenbohrung (72) nach oben gepresst wird. Dabei strömt über die Überströmkerben (74) die Druckluft über den Luftverteilbereich (75) in die Freiblasbohrungen (76) und über die Durchgangsbohrung (87) der Kolbenstange (86) in die ausgefahrenen Düsenbohrungen (89) zum Freiblasen der Stirnseite der Verschlusskappe (70). Der Spannring (100) und der Ringkolben (40) dichten hierbei den zwischen dem Stützrohr (16) und dem Anschlagrohr (32) liegenden Spalt ab.

Nach Figur 4 liegt an der Ringkolbenfrontseite (41) Druckluft an, um so den Ringkolben (40) unter einem Spannen der Schraubendruckfedern (69) auf dem Gehäusedeckel (31) aufsitzen zu lassen, wodurch der Eintauchabschnitt (65) auf die Höhe des Spannrings (100) gelangt. Der Magnetplattenträger (170) ist über den am Ringkolben (40) befestigten Haltebolzen (172) in seine unterste Position verlagert worden, sodass seine Unterseite fast auf dem Innenraumboden (175) aufsteht. Des Weiteren wird die Druckluftversorgung der Aufnahmeausnehmung (20) unterbrochen. Der Reinigungskolben (85) fährt - unterstützt von seiner Schließfeder (91) - in die Verschlusskappe (70) wieder ein. Die Aufnahmeausnehmung (20) ist für ein Eintauchen des Kombibolzens (130) vorbereitet.

Gemäß Figur 5 ist der Kombibolzen (130) schon großteils in die Aufnahmeausnehmung (20) unter einem Voranschieben der Verschlusskappe (70) gegen die Wirkung der Schließfeder (82) eingetaucht. Der Spannbereich (133) des Kombibolzens (130) drückt dabei - unter einer Dehnung der Elastomerkörper (121) des Spannrings (100) - den Spannring (100) in den Eintauchabschnitt (65) des Ringkolbens (40). Das Dehnen der Elastomerkörper (121) hat kurz zuvor auch die Verschlusskappe (70) bewirkt.

Nach Figur 6 ist der Kombibolzen (130) mit seiner Außenspannfläche (138) an der Zentrierspannfläche (21) der Flanschplatte (13) vollflächig zur Anlage gekommen. Die axiale Anlagefläche (132) des Kombibolzens (130) liegt nun in der Ebene, in der die dem Werkstück zugewandten Kontaktstellen der Oberseite der Flanschplatte (13) liegen. Der Spannring (100) hat sich in seine Ausgangslage zusammengezogen, womit er zum einen den Eintauchabschnitt (65) des Ringkolbens (40) großteils verlassen hat und zum anderen mit seiner Hüllspannfläche (108) an der Innenspannfläche (134) des Kolbenbolzens (130) anliegt. Die Verschlusskappe (70) steht in geringem Abstand, z.B. 0,1 mm, vor dem Boden der Verschlusskappenausnehmung (33) des Gehäusedeckels (31).

Gemäß Figur 7 wird nach einem Entlüften des vor der Ringkolbenfrontseite (41) gelegenen Zylinderraums der Ringkolben (40) aufgrund der Wirkung der Schraubendruckfedern (69) - nur ggf. mit Druckluftunterstützung - nach oben gedrückt, wodurch die Ringnutkeilfläche (63) hinter den Spannring (100) gelangt, um zum endgültigen Fixieren des Kombibolzens (130) in der Spannvorrichtung (10) dessen Spannelemente (101) gegen die Innenspannfläche (134) des Spannbereichs (133) des Kombibolzens (130) zu pressen. Eine auf den Kombibolzen (130) wirkende Zugkraft wird über den Spannbereich (133) in den Spannring (100) eingeleitet, um von dort über die plane Spannfläche (105) in die Stirnfläche des Anschlagrohrs (32) und somit ins Gehäuse (11) übertragen zu werden.

Hat sich der Spannring (100) noch nicht vollständig an der Innenspannfläche (134) des Spannbereichs (133) des Kombibolzens (130) angelegt, vgl. Figur 6, so werden die noch in den Eintauchabschnitt (65) ragenden Teile (101, 121) mithilfe der kegelstumpfmantelförmigen Rückhubfläche (66) durch Anlage an der Spannringrückhubfläche (112) des Spannrings (100) gegen den Kombibolzen (130) geschoben. Der Magnetplattenträger (170) befindet sich im oberen Viertel seines Verfahrbereichs. Seine genaue Position variiert von Kombibolzen (130) zu Kombibolzen (130), abhängig von deren Bearbeitungsgenauigkeit. Auch ist diese Position eine Funktion des Verschleißes aller am Spannvorgang beteiligten Bauteile, sofern sie die verschleißbehafteten Spannflächen und Keilgetriebeflächen betreffen.

Die Messabweichung von Spannvorgang zu Spannvorgang ist kleiner als 5 µm. Die Einzugskraft liegt hierbei im Bereich von 18 kN.

Das Lösen des Kombibolzens (130) erfolgt im Wesentlichen in umgekehrter Reihenfolge. Der Ringkolben (40) wird mit Druckluft gegen den Gehäusedeckel (31) gepresst, wodurch der Spannring (100) beim Herausziehen des Kolbenbolzens (130) in den Eintauchabschnitt (65) des Ringkolbens (40) verdrängt wird. Die kegelstumpfmantelförmige Hüllspannfläche (108) des Kombibolzens (130) erleichtert diesen Vorgang.

Die Figur 13 zeigt die Rückseite der Spannvorrichtung (10). Die Druckluft kann bei diesem Spannsystem (1) in zwei verschiedenen Gehäusebereichen in die Spannvorrichtung (10) eingeleitet werden. Der übliche Gehäusebereich ist die Unterseite des Gehäusedeckels (31), an der z.B. vier Anschlüsse für Druckluftschläuche vorgesehen sind. An der Unterseite befindet sich im Bereich der Nummerierung "1" ein Entriegelungsdruckluftanschluss (177). Über diesen Anschluss wird die Druckluft im Gehäuse (11) vor die Ringkolbenfrontseite (41) gefördert. Im Bereich der Nummerierung "3" ein Sperrluftanschluss (179). Über ihn gelangt beispielsweise radial durch den Ringkolben (40) hindurch die Druckluft in den Eintauchabschnitt (65), um von dort entlang dem Spannring (100) zwischen dem Stützrohr (16) und dem Anschlagrohr (32) in die Aufnahmeausnehmung (20) einzuströmen. Neben der Nummerierung "2" befindet sich ein Spanndruckluftanschluss (176), über den der Ringkolbenboden (45) mit Druckluft beaufschlagt werden kann, um die Spannbewegung des Ringkolbens (40) zu unterstützen. Der Ausblasanschluss (178) wird nur verwendet, wenn die Spannvorrichtung (10) nicht mit einer Verschlusskappe (70) ausgestattet ist. Dann wird vom Boden der Verschlusskappenausnehmung (33) aus Druckluft in Richtung der Aufnahmeausnehmung (20) geblasen, um dort sich befindende Schmutzpartikel ins Freie zu fördern.

Zum schlauchlosen Anschluss der Druckluft sind auf der Rückseite des Flansches bzw. der Flanschplatte (13) fünf Anschlüsse (17, 18, 19, 26, 25) vorgesehen. Diese Anschlüsse werden aus Bohrungen versorgt die sich im Träger der Spannvorrichtung (10) befinden. Die Anschlüsse sind der Entriegelungsdruckluftanschluss (17), der Ausblasanschluss (18), der Sperrluftanschluss (19), der Spanndruckluftanschluss (26) und ein Auflagenkontrollanschluss (25), vgl. hierzu Figur 2.

### Bezugszeichenliste:

- 1: Spannsystem
- 7: Führungsdurchgangsbohrung für (172)
- 8: Führungssackloch für (174)
- 9: Mittellinie

- 10: Spannvorrichtung, Baugruppe
- 11: Gehäuse
- 12: Gehäusegrundkörper, Gehäuseteil
- 13: Flanschplatte
- 14: Positionierlanglöcher
- 15: Befestigungsschrauben
- 16: Stützrohr
- 17: Entriegelungsdruckluftanschluss an (13)
- 18: Ausblasanschluss an (13)
- 19: Sperrluftanschluss an (13)

- 20: Aufnahmeausnehmung
- 21: Zentrierspannfläche, kegelstumpfmantelförmig
- 22: Zentrierspalt
- 23: Hintergriffsabsatz
- 24: Kanalsystem
- 25: Auflagenkontrollanschluss an (13)
- 26: Spanndruckluftanschluss an (13), optional
- 27: Zylinder
- 28: Entlüftungsnut
- 29: Axialringnut

- 31: Gehäusedeckel, Gehäuseteil
- 32: Anschlagrohr
- 33: Verschlusskappenausnehmung
- 34: Sacklochbohrungen
- 35: Querbohrung

- 40: Ringkolben
- 41: Ringkolbenfrontseite, oben
- 42: Kolbenfase, Fase
- 45: Ringkolbenboden, Kolbenboden
- 46: Federführungsbohrungen
- 47: Außenwandung
- 48: Innenwandung
- 49: Gewindebohrung, gestuft

- 51: Kolbenbohrung, zentral
- 52: Dichtzone, oben, Teil der Kolbeninnenabdichtung
- 53: Dichtringnut, oben, Teil der Kolbeninnenabdichtung
- 54: Dichtring, oben, Teil der Kolbeninnenabdichtung
- 55: Dichtzone, unten, Teil der Kolbeninnenabdichtung
- 56: Dichtringnut, unten, Teil der Kolbeninnenabdichtung
- 57: Dichtring, unten, Teil der Kolbeninnenabdichtung

- 61: Ringnut, Arbeitsringnut
- 62: Arbeitsabschnitt
- 63: Ringnutkeilfläche, kegelstumpfmantelförmig, Keilgetriebeteil
- 65: Eintauchabschnitt
- 66: Rückhubfläche, kegelstumpfmantelförmig
- 69: Schraubendruckfedern, Rückholfedern, Federelemente

- 70: Verschlusskappe
- 71: Wellenbund
- 72: Stufenbohrung
- 73: Zylinderbereich
- 74: Überströmkerben
- 75: Luftverteilbereich
- 76: Freiblasbohrungen
- 77: Führungsbohrung
- 78: Spreizfase
- 81: Federführungsringnut
- 82: Schließfeder, Schraubendruckfeder

- 85: Reinigungskolben
- 86: Kolbenstange
- 87: Durchgangsbohrung
- 88: Radialbohrung
- 89: Düsenbohrung
- 91: Schließfeder, Schraubendruckfeder

- 100: Spannring
- 101: Spannelemente, segmentartig
- 102: Einzelquerschnitt
- 105: Spannfläche, oben, plan
- 106: Aufliegefläche, unten, plan
- 107: Aufschiebekeilfläche, oben, innen
- 108: Hüllspannfläche, unten, innen
- 109: Innenfläche, zylindrisch
- 111: Spannringkeilfläche, Keilgetriebeteil
- 112: Spannringrückhubfläche
- 115: Hintergriffsausnehmung
- 116: Bohrung
- 117: Hintergriffe

- 121: Federelemente, Elastomerkörper, segmentartig
- 122: Klemmzapfen
- 130: Kombibolzen, Baugruppe
- 131: Passzylinderabschnitt
- 132: Axialanlagefläche, Anlagefläche
- 133: Spannbereich
- 134: Innenspannfläche, Spannfläche
- 135: Spannringrückhubfase
- 136: Taillenbereich
- 137: Zentrierbereich
- 138: Außenspannfläche, Spannfläche
- 139: Durchgangsbohrung

- 150: Sensorengehäuse
- 151: Gehäuseunterteil
- 152: Gehäuseinnenraum
- 153: Kabelschacht
- 154: Fixierbereich
- 155: Hardwarebereich
- 156: Maßverkörperungshubbereich
- 157: Innenraumboden
- 158: Kabelklemmausnehmung

- 160: Platinenträger
- 161: Trägerflansch
- 162: Passstifte
- 165: Schrauben für (161)
- 166: Schrauben für (221)

- 170: Magnetplattenträger
- 171: Bohrungen mit Zylindersenkungen
- 172: Haltebolzen
- 173: Gewindestift
- 174: Führungsbolzen
- 175: Gewindestift
- 176: Spanndruckgehäuseanschluss
- 177: Entriegelungsdruckgehäuseanschluss
- 178: Ausblasgehäuseanschluss
- 179: Sperrluftgehäuseanschluss
- 181: Foliendichtung, ringförmig für (151)
- 182: Gehäuseindexstift
- 183: Gehäuseschrauben
- 184: Passstifte
- 187: Dichtgewindestift

- 190: Kabeldurchführblock
- 191, 192: Seitenflächen
- 193: Rückseite
- 194: Kabeldurchführausnehmung
- 195, 196: Langlöcher
- 197: Umklemmnut
- 198: Schrauben

- 200: Sensorengehäusedeckel, Deckel
- 201: Hubausnehmung
- 202: Durchbruch mit Zylindersenkung
- 203: Durchbruch
- 206: Spanndruckdeckelbohrung
- 207: Entriegelungsdruckdeckelbohrung
- 208: Ausblasdeckelbohrung
- 209: Sperrluftdeckelbohrung
- 211: Foliendichtung für (200)
- 212: Dichtring
- 214: Deckelindexstift
- 215: Deckelschrauben
- 220: Sensorsystem
- 221: Platine, bestückt; Elektronik
- 222: Sensor-IC, Sensor
- 223: Magnetplatte, Maßverkörperung
- 225: Kabel, fünfadrig
- 226: Stecker

## Patentansprüche

1. Spannsystem mit einer hubüberwachten Spannvorrichtung,
- wobei das Spannsystem eine Spannvorrichtung (10) und einen Kombibolzen (130) umfasst,
- wobei die Spannvorrichtung (10) im Gehäuse (11) mindestens einen auf mindestens drei Spannelemente (101) wirkenden Kolben (40) lagert und zudem eine Aufnahmeausnehmung (20) zur temporären Aufnahme des Kombibolzens (130) aufweist,
- wobei der Kombibolzen (130) mithilfe der Spannelemente (101) in der Aufnahmeausnehmung (20) fixierbar ist,
**dadurch gekennzeichnet**
- **dass** am Gehäuse (11) ein adaptierbares Sensorengehäuse (150) angeordnet ist, in dem ein absolutes Wegmesssystem (220) untergebracht ist und
- **dass** das Wegmesssystem einen im Sensorengehäuse (150) ortsfest angeordneten Sensor-IC (222) und eine mit dem Kolben (40) mechanisch gekoppelte Magnetplatte (223) umfasst.

2. Spannsystem gemäß dem Anspruch 1, **dadurch gekennzeichnet, dass** die Magnetplatte (223) eine Master- und eine Noniusspur aufweist, wobei beide Spuren von im Sensor-IC (222) untergebrachten Hallsensoren während des Messvorgangs abgetastet werden.

3. Spannsystem gemäß dem Anspruch 1 oder 2, **dadurch gekennzeichnet, dass** die Positioniergenauigkeit des Wegmesssystems (220) bei 3 µm liegt.

4. Spannsystem gemäß dem Anspruch 1, **dadurch gekennzeichnet, dass** der Messweg des Wegmesssystems (220) mindestens 5 % länger als der Hub des Kolbens (40) ist.

5. Spannsystem gemäß dem Anspruch 1, **dadurch gekennzeichnet, dass** die Aufnahmeausnehmung (20) automatisch mit einer Verschlusskappe (70) verschließbar ist.

6. Spannsystem gemäß dem Anspruch 1, **dadurch gekennzeichnet, dass** der Sensor-IC (222) zusammen mit der Hardware für die Auswerteelektronik auf einer im Sensorengehäuse (150) angeordenten Platine (221) sitzt.

7. Spannsystem gemäß dem Anspruch 1, **dadurch gekennzeichnet, dass** die Auswerteelektronik mindestens drei Hubpositionen der Magnetplatte (223) unterscheidet, wobei eine erste für eine Aufnahmeausnehmung (20) ohne Kombibolzen (130), eine zweite für eine für die Aufnahme des Kombibolzens (130) freigegebene Aufnahmeausnehmung (20) und eine dritte für das Spannen des Kombibolzens (130) in der Aufnahmeausnehmung (20) steht.

8. Spannsystem gemäß dem Anspruch 7, **dadurch gekennzeichnet, dass** die Hubpositionen am oder im Bereich der Spannvorrichtung (10) mittels LED's oder eines Displays anzeigbar sind.

9. Spannsystem gemäß dem Anspruch 1, **dadurch gekennzeichnet, dass** die Magnetplatte (223) auf einem Magnetplattenträger (170) fixiert ist, der im Sensorengehäuse (150) untergebracht und im Gehäuse (11) linear geführt am Kolben (40) befestigt ist.

10. Spannsystem gemäß dem Anspruch 1, **dadurch gekennzeichnet, dass** das Sensorengehäuse (150) für alle pneumatischen oder hydraulischen Anschlüsse des Gehäuses (11) separate Anschlüsse (176-179) aufweist, deren Zuleitungen durch das Sensorengehäuse (150) hindurchgeführt sind.

## Claims

1. A clamping system with a stroke-monitored clamping device,
- wherein the clamping system comprises a clamping device (10) and a combination bolt (130),
- wherein the clamping device (10) supports at least one piston (40), which acts on at least three clamping elements (101), in the housing (11) and additionally has a receiving recess (20) for temporarily receiving the combination bolt (130),
- wherein the combination bolt (130) can be fixed in the receiving recess (20) with the aid of the clamping elements (101),
**characterised in that**
- an adaptable sensor housing (150) is arranged on the housing (11), in which sensor housing an absolute distance measurement system (220) is accommodated, and
- the distance measurement system comprises a sensor IC (222), which is arranged in a stationary manner in the sensor housing (150), and a magnetic plate (223), which is mechanically coupled to the piston (40).

2. The clamping system according to Claim 1, **characterised in that** the magnetic plate (223) has a master track and a vernier track, wherein both tracks are scanned during the measurement process by Hall sensors accommodated in the sensor IC (222).

3. The clamping system according to Claim 1 or 2, **characterised in that** the positional accuracy of the distance measurement system (220) is 3 µm.

4. The clamping system according to Claim 1, **characterised in that** the measurement distance of the distance measurement system (220) is at least 5% longer than the stroke of the piston (40).

5. The clamping system according to Claim 1, **characterised in that** the receiving recess (20) is automatically closable with a closure cap (70).

6. The clamping system according to Claim 1, **characterised in that** the sensor IC (222) together with the hardware for the evaluation electronics is seated on a printed circuit board (221) arranged in the sensor housing (150).

7. The clamping system according to Claim 1, **characterised in that** the evaluation electronics differentiate at least three stroke positions of the magnetic plate (223), wherein a first one stands for a receiving recess (20) without combination bolt (130), a second one stands for a receiving recess (20) open for receiving the combination bolt (130), and a third one stands for the clamping of the combination bolt (130) in the receiving recess (20).

8. The clamping system according to Claim 7, **characterised in that** the stroke positions can be displayed on or in the region of the clamping device (10) by means of LEDs or a display panel.

9. The clamping system according to Claim 1, **characterised in that** the magnetic plate (223) is fixed to a magnetic plate carrier (170), which is accommodated in the sensor housing (150) and is fastened to the piston (40) so as to be guided linearly in the housing (11).

10. The clamping system according to Claim 1, **characterised in that** the sensor housing (150) has separate connections (176-179) for all the pneumatic or hydraulic connections of the housing (11), the feed lines of which run through the sensor housing (150).

## Revendications

1. Système de serrage, pourvu d'un dispositif de serrage à course contrôlée,
- le système de serrage comprenant un dispositif de serrage (10) et un boulon mixte (130),
- le dispositif de serrage (10) recevant dans le carter (11) au moins un piston (40), agissant sur au moins trois éléments de serrage (101) et comportant par ailleurs un évidement récepteur (20), destiné à recevoir temporairement le boulon mixte (130),
- le boulon mixte (130) étant susceptible d'être fixé dans l'évidement récepteur (20) à l'aide des éléments de serrage (101), **caractérisé**
- **en ce que** sur le carter (11) est placé un boîtier de capteurs (150) adaptable, dans lequel est logé un système capteur de déplacement (220) absolu et
- **en ce que** le système capteur de déplacement comprend un capteur IC (222) placé de manière stationnaire dans le boîtier de capteurs (150) et une plaque magnétique (223) mécaniquement accouplée avec le piston (40).

2. Système de serrage selon la revendication 1, **caractérisé en ce que** la plaque magnétique (223) comporte une piste maître et une piste nonius, pendant le processus de mesure, les deux pistes étant balayées par des capteurs à effet Hall logés dans le capteur IC (222).

3. Système de serrage selon la revendication 1 ou 2, **caractérisé en ce que** la précision de positionnement du système capteur de déplacement (220) est de 3 µm.

4. Système de serrage selon la revendication 1, **caractérisé en ce que** le trajet de mesure du système capteur de déplacement (220) est plus long d'au moins 5 % que la course du piston (40).

5. Système de serrage selon la revendication 1, **caractérisé en ce que** l'évidement récepteur (20) est susceptible d'être fermé automatiquement par un capuchon de fermeture (70).

6. Système de serrage selon la revendication 1, **caractérisé en ce que** le capteur IC (222) repose, conjointement avec le matériel informatique pour le système électronique d'évaluation sur une carte de circuit imprimé (221) placée dans le boîtier de capteurs (150).

7. Système de serrage selon la revendication 1, **caractérisé en ce que** le système électronique d'évaluation différencie au moins trois positions de course de la plaque magnétique (223), une première étant dédiée à un évidement récepteur (20) sans boulon mixte (130), une deuxième à un évidement récepteur (20) libéré pour la réception du boulon mixte (130) et une troisième au serrage du boulon mixte (130) dans l'évidement récepteur (20).

8. Système de serrage selon la revendication 7, **caractérisé en ce que** les positions de course sont susceptibles d'être affichées sur ou dans la zone du dispositif de serrage (10) au moyen de LED ou d'un écran.

9. Système de serrage selon la revendication 1, **caractérisé en ce que** la plaque magnétique (223) est fixée sur un support (170) de plaque magnétique, qui est logé dans le boîtier de capteurs (150) et qui dans le carter (11) est fixé en étant guidé linéairement sur le piston (40).

10. Système de serrage selon la revendication 1, **caractérisé en ce que** pour tous les raccordements pneumatiques ou hydrauliques du carter (11), le boîtier de capteurs (150) comporte des raccordements (176 à 179) séparés, dont les conduites d'alimentation sont tirées à travers le boîtier de capteurs (150).
